# EUROPÄISCHE PATENTSCHRIFT

(11) **EP 0 713 966 B1**
(45) Veröffentlichungstag und Bekanntmachung des Hinweises auf die Patenterteilung: **31.05.2000**
(21) Anmeldenummer: 95114023.5
(22) Anmeldetag: 07.09.1995
(51) Int. Cl.: F02M 53/06, F02M 31/135, F02M 69/04, F02M 69/08

(54) **Brennstoffeinspritzvorrichtung für eine Brennkraftmaschine**
Fuel injection device for an internal combustion engine
Dispositif d'injection de combustible pour un moteur à combustion interne

(30) Priorität: 24.11.1994 DE 4441792
(43) Veröffentlichungstag der Anmeldung: 29.05.1996
(73) Patentinhaber: ROBERT BOSCH GMBH, 70442 Stuttgart (DE)
(72) Erfinder: Krauss, Bernd, D-74343 Sachsenheim (DE); Awarzamani, Assadollah, Dipl.-Ing., D-71706 Markgröningen (DE); Wilfert, Thomas, Dipl.-Ing., D-71636 Ludwigsburg (DE); Heyse, Jörg, Dipl.-Ing., D-71706 Markgröningen (DE)

(56) Entgegenhaltungen:
- EP-A- 0 456 535
- EP-A- 0 592 100
- DE-C- 3 921 739
- US-A- 5 048 500
- PATENT ABSTRACTS OF JAPAN vol. 18 no. 269 (M-1609) ,23.Mai 1994 & JP-A-06 042417 (FUJI HEAVY IND. LTD.) 15.Februar 1994,
- PATENT ABSTRACTS OF JAPAN vol. 18 no. 283 (M-1613) ,30.Mai 1994 & JP-A-06 050242 (MITSUBISHI ELECTRIC CORP.) 22.Februar 1994,

## Beschreibung

### Stand der Technik

Die Erfindung geht aus von einer Brennstoffeinspritzvorrichtung für eine Brennkraftmaschine nach der Gattung des Anspruchs 1. Es ist schon eine A Brennstoffeinspritzvorrichtung bekannt (EP 0 456 535 A), bei der ein elektrisches Heizelement bedarfsweise in den Brennstoffstrahl eingebracht wird. Hierzu ist eine Feder vorgesehen, mit deren Hilfe das auf dem Schieber aufgebrachte Heizelement aus dem Brennstoffstrahl bewegt wird. Eine Zufuhr von Druckluft im ausgefahrenen Zustand des Heizelements und Abgabe derselben aus dem Heizelement wird nicht offenbart. Aus der DE 28 43 534 A ist ferner eine Brennstoffeinspritzvorrichtung bekannt, bei der ein Brennstoffeinspritzventil mit einem elektrischen Heizelement zum Aufheizen des Brennstoffs ausgestattet ist. Der nicht beheizte Brennstoff gelangt dabei zunächst aus einer von einem Ventilschließkörper und einem Ventilsitz schließbaren Zumeßöffnung in einen Mischkanal im Brennstoffeinspritzventil, dem aus einem Drosselklappenstutzen entnommene Luft zugeführt wird, so daß sich ein mit Luft vermischter Brennstoffstrahl ergibt. Anschließend strömt der mit Luft vermischte Brennstoffstrahl weiter in ein eine Honigwabenstruktur aufweisendes elektrisches Heizelement, das den Brennstoffstrahl mit der vermischten Luft beim Durchströmen des Heizelements aufheizt. Abschließend verläßt der mit Luft vermischte, teilweise dampfförmige Brennstoffstrahl durch eine Abspritzöffnung das Brennstoffeinspritzventil. Der mit Luft vermischte Brennstoffstrahl durchströmt dabei stets das Heizelement, und zwar auch in Betriebsbereichen, in denen keine Aufheizung des Brennstoffstrahls erwünscht, beziehungsweise das Heizelement abgeschaltet ist. Dabei verliert der durch das Heizelement hindurchströmende Brennstoffstrahl aufgrund eines erhöhten Strömungswiderstandes an Geschwindigkeit und an Strömungsimpuls. Dadurch entsteht bei abgeschaltetem Heizelement stromabwärts der Abspritzöffnung ein kompakter Strahl mit unerwünscht großen Brennstofftröpfchen, die dazu neigen sich an den Wandungen der Strömungswege niederzuschlagen und die ein ungünstiges Verbrennungsverhalten in den Zylindern der Brennkraftmaschine bewirken.

### Vorteile der Erfindung

Die erfindungsgemäße Brennstoffeinspritzvorrichtung mit den Merkmalen des Anspruchs 1 hat demgegenüber den Vorteil, daß das Brennstoffeinspritzventil insbesondere in der Kaltstartphase der Brennkraftmaschine eine gute Brennstoffzerstäubung mit wenigstens teilweiser Verdampfung des Brennstoffstrahls hat, so daß durch eine optimal ablaufende Verbrennung insbesondere in der Kaltstartphase und der anschließenden Aufwärmphase der Brennkraftmaschine nur äußerst geringe schädliche Bestandteile im Abgas entstehen und der Brennstoffverbrauch reduziert wird. Darüber hinaus ist bei abgeschalteter Heizvorrichtung kein den abgespritzten Brennstoffstrahl behindernder Strömungswiderstand vorgesehen, so daß stets eine bestmögliche Brennstoffzerstäubung erfolgt, bei der vorteilhafterweise aufgrund der verbesserten Aufbereitung des Brennstoffstrahls, insbesondere nach dem Kaltstart der Brennkraftmaschine, frühzeitig eine Hinzuschaltung einer Abgasrückführung erfolgen kann, wodurch sich eine weitere Reduzierung schädlicher Bestandteile im Abgas, insbesondere von Stickoxiden, ergibt.

Durch die in den abhängigen Ansprüchen aufgeführten Maßnahmen sind vorteilhafte Weiterbildungen und Verbesserungen der im Anspruch 1 angegebenen Brennstoffeinspritzvorrichtung möglich. Vorteilhafterweise können zur Verwirklichung der Erfindung bereits vorhandene Brennstoffeinspritzventile ohne Änderungen eingesetzt werden, so daß eine schnelle und kostengünstige Umsetzung der Erfindung möglich ist. Insbesondere sind dabei nur geringe Abänderungen am Ansaugrohr der Brennkraftmaschine erforderlich.

### Zeichnung

Ausführungsbeispiele der Erfindung sind in der Zeichnung vereinfacht dargestellt und in der nachfolgenden Beschreibung näher erläutert. Es zeigen Figur 1 in teilweiser Schnittdarstellung eine Brennstoffeinspritzvorrichtung, bei der ein möglicher Aufbau einer Ausfahrvorrichtung für ein Heizelement beispielhaft gezeigt wird, Figur 2 in teilweiser Schnittdarstellung die Brennstoffeinspritzvorrichtung gemäß einem ersten erfindungsgemäßen Ausführungsbeispiel, Figur 3 in teilweiser Schnittdarstellung die Brennstoffeinspritzvorrichtung gemäß einem zweiten erfindungsgemäßen Ausführungsbeispiel.

### Beschreibung der Ausführungsbeispiele

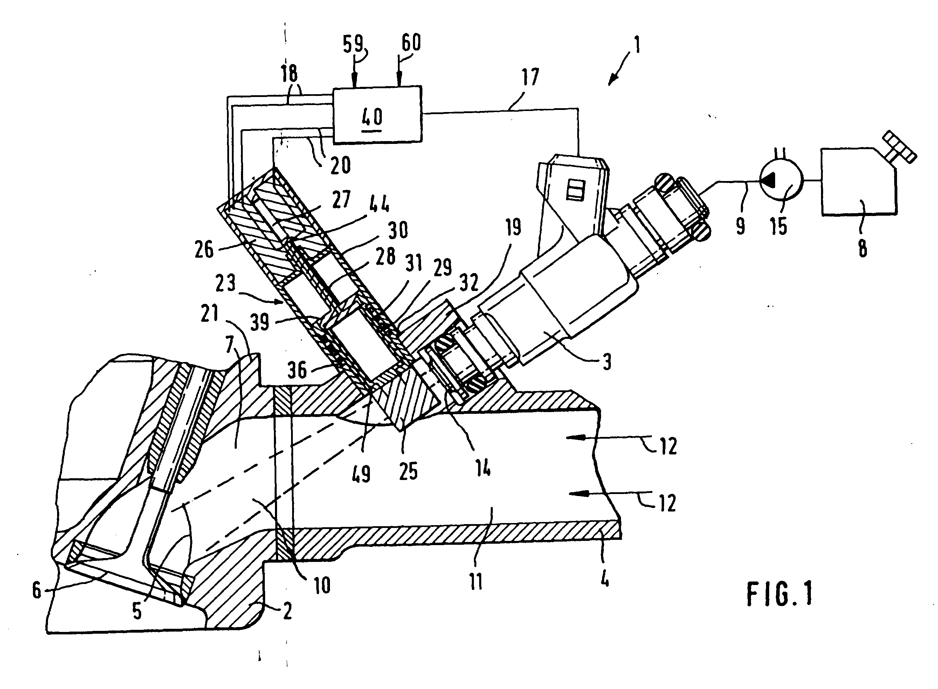

Die Figur 1 zeigt in teilweiser Schnittdarstellung eine mit 1 gekennzeichnete Brennstoffeinspritzvorrichtung, die insbesondere für eine gemischverdichtende, fremdgezündete Brennkraftmaschine 2 vorgesehen ist, welche ebenfalls in teilweiser Schnittdarstellung gezeigt ist. Die Brennstoffeinspritzvorrichtung 1 besitzt wenigstens ein Brennstoffeinspritzventil 3 bekannter Bauart, das beispielsweise steckbar in eine Anformung 19 eines Ansaugrohres 4 der Brennkraftmaschine 2 eingebracht ist. Das Brennstoffeinspritzventil 3 ist in der Anformung 19 derart angeordnet, daß der Brennstoff in Richtung einer Einlaßöffnung 5 wenigstens eines Einlaßventils 6 der Brennkraftmaschine 2 abgespritzt wird. Hierzu eignen sich elektromagnetisch betätigbare Brennstoffeinspritzventile 3, die gegebenenfalls über einen sogenannten Hilfsluftanschluß verfügen, um ein gasförmiges Medium über den Hilfsluftanschluß dem Brennstoffeinspritzventil 3 zuzuführen. Als Medium kann zum Beispiel die durch einen Bypasskanal vor einer Drosselklappe in dem Ansaugrohr 4 der Brennkraftmaschine 2 abgezweigte Ansaugluft, durch ein Zusatzgebläse geförderte Luft, aber auch rückgeführtes Abgas verwendet werden. Die Verwendung des rückgeführten Abgases ermöglicht eine weitere Reduzierung der schädlichen Bestandteile im Abgas. Die Einlaßöffnung 5 ist Teil eines in einem Zylinderkopf 21 vorgesehenen Einlaßkanals 7, der in Verlängerung eines vom Ansaugrohr 4 begrenzten Ansaugkanals 11 zum Einlaßventil 6 führt. In den Figuren 1 bis 3 strömt die von der von der Brennkraftmaschine 2 angesaugte Absaugluft im Ansaugkanal 11 und im Einlaßkanal 7 entlang eingezeichneter Pfeile 12 von rechts nach links. Die Ansaugluft vermischt sich im Ansaugkanal 11 und insbesondere im Einlaßkanal 7 mit dem vom Brennstoffeinspritzventil 3 abgespritzten Brennstoff, so daß nach der Einlaßöffnung 5 des Einlaßventils 6 ein Brennstoff-Luft-Gemisch vorhanden ist, das anschließend in wenigstens einem Brennraum der Brennkraftmaschine 2 verbrennt. Die Menge der Ansaugluft ist in bekannter Weise von einem stromaufwärts des Brennstoffeinspritzventils 3 im Ansaugkanal 11 drehbar untergebrachten Drosselorgan steuerbar, welches beispielsweise in Form einer Drosselklappe ausgebildet ist.

Die Brennstoffeinspritzventile 3 der Brennkraftmaschine 2 sind zur Brennstoffversorgung, beispielsweise über einen gemeinsamen Brennstoffverteiler (ein sogenanntes Fuel-Rail), an einer in den Figuren 1 bis 3 dargestellten Brennstofförderpumpe 15 angeschlossen, welche den Brennstoff aus einem Brennstoffbehälter 8 über eine Brennstoffleitung 9 zu einem Brennstoffverteiler und von dort zu den einzelnen Brennstoffeinspritzventilen 3 fördert. Der Brennstoff wird im Brennstoffeinspritzventil 3 in bekannter Weise von einem Ventilschließkörper, beispielsweise einer Ventilschließkugel oder einer Ventilschließnadel und einem Ventilsitz zugemessen. Das beispielsweise elektromagnetisch betätigbare Brennstoffeinspritzventil 3 ist mittels elektrischer Anschlußleitungen 17 mit einem elektronischen Steuergerät 40 verbunden und von diesem ansteuerbar. Das elektronische Steuergerät 40 ist mit Betriebsgrößen der Brennkraftmaschine 2 erfassenden Mitteln, beispielsweise Sensoren verbunden, um aus der Auswertung der Betriebsgrößen unter anderem die Abspritzmenge der Brennstoffeinspritzventile 3 zu steuern, wodurch beispielsweise eine elektronische Motorleistungssteuerung der Brennkraftmaschine 2 möglich ist. Dem elektronischen Steuergerät 40 werden elektrische Signale 59 zugeführt, die beispielsweise von einem Drosselklappenpotentiometer stammen, das Auskunft über die Lage und die Lageänderung der Drosselklappe gibt. Weiterhin kann das elektronische Steuergerät 40 mit einem im Ansaugkanal 11 des Ansaugrohres 4 der Brennkraftmaschine 2 untergebrachten Luftmassenmesser verbunden sein, welcher elektrische Signale 60 entsprechend der im Ansaugkanal 11 des Ansaugrohres 4 strömenden Ansaugluftmasse dem elektronischen Steuergerät 40 zuführt. Unter anderem erhält das elektronische Steuergerät 40 auch ein Drehzahlsignal der Brennkraftmaschine 2.

Der Brennstoff verläßt das Brennstoffeinspritzventil 3 an seinem Abspritzende aus einer Abspritzöffnung 14 in Form eines gebündelten, beispielsweise kegelförmigen oder schnurstrahlförmigen Brennstoffstrahls 10. Erfindungsgemäß wird der die Abspritzöffnung 14 verlassende Brennstoffstrahl 10 von einem elektrischen Heizelement 25 beheizt, das jedoch nur bei Bedarf in den Brennstoffstrahl 10 gebracht wird und ansonsten außerhalb des Brennstoffstrahls 10 verbleibt. Hierfür ist eine Ausfahrvorrichtung 23 vorgesehen, die bei Bedarf das Heizelement 25 in etwa quer zum Brennstoffstrahl 10 des Brennstoffeinspritzventils 3 in den Brennstoffstrahl 10 befördert, so daß das Heizelement 25 in etwa vollständig im Brennstoffstrahl 10 liegt. Das elektrische Heizelement 25 besteht beispielsweise aus mehreren gefalteten, elektrischen Heizplatten, die zwischen sich eine Vielzahl von Strömungskanälen mit möglichst großer Wärmeaustauschfläche bilden. Die einzelnen Heizplatten werden beispielsweise aus PTC-Widerstandselementen gebildet, die im bestromten Zustand aufgrund ihres positiven Widerstandskoeffizienten Wärme an den in den Strömungskanälen strömenden Brennstoff abgeben. Der Brennstoffstrahl 10 durchdringt die Strömungskanäle des Heizelements 25 und wird beim Hindurchströmen von den PTC-Widerstandselementen aufgeheizt, so daß der Brennstoff nach dem Verlassen des Heizelements 25 im wesentlichen im verdampften Zustand vorliegt. Die Betätigung der Ausfahrvorrichtung 23 ist auf den kalten Betriebszustand der Brennkraftmaschine 2, beispielsweise während der ersten 120 Sekunden nach dem Start, beschränkt. Nach den beispielsweise etwa 120 Sekunden befindet sich die Brennkraftmaschine 2 bereits in der Aufwärmphase, bei der eine Brennstoffaufheizung nicht mehr erforderlich ist, so daß die Ausfahrvorrichtung 23 beispielsweise vom elektronischen Steuergerät 40 abermals betätigt wird, um das elektrische Heizelement 25 aus dem Brennstoffstrahl 10 zu entfernen, so daß sich wieder ein vom Heizelement 25 unbeeinflußter und ungestörter Brennstoffstrahl 10 ergibt. Durch die Beheizung des Brennstoffstrahls 10 erfolgt eine Reduzierung der schädlichen Abgasbestandteile im Abgas und eine Verminderung des Brennstoffverbrauchs.

In Figur 1 ist die Ausfahrvorrichtung 23 beispielsweise elektromagnetisch betätigbar ausgebildet und vom elektronischen Steuergerät 40 ansteuerbar. Die Ausfahrvorrichtung 23 besitzt beispielsweise einen Schaltmagneten 26, der tauchspulenartig ausgebildet und über elektrische Anschlußleitungen 18 mit dem Steuergerät 40 verbunden ist. Der Schaltmagnet 26 ist außerhalb des Ansaugrohres 4 an einer Hülse 30 angebracht, die in der Nähe des Brennstoffeinspritzventils im Bereich der Anformung 19 am Ansaugrohr 4 befestigt und in welcher das elektrische Heizelement 25 verschiebbar angeordnet ist. Der Schaltmagnet 26 hat im Innern eine Zentralbohrung 27, in welcher ein Stift 28 mit einem dauermagnetischen Ende 44 verschiebbar geführt ist. Mit seinem dem Schaltmagneten 26 gegenüberliegenden, beispielsweise T-förmigen Ende 39 ist der Stift 28 mit einem hülsenförmigen Schieber 29 verbunden, der in der Hülse 30 verschiebbar untergebracht ist. Das elektrische Heizelement 25 ist am dem Ansaugkanal 11 zugewandten Ende 49 des Schiebers 29 angebracht. Bei Betätigung der Ausfahrvorrichtung 23 fährt der Schieber 29 die Heizvorrichtung 25 aufgrund der vom Schaltmagnet 26 auf den Stift 28 ausgeübten magnetischen Kräfte aus der Hülse 30, wobei der Schieber 29 in seiner in den Figuren 1 bis 3 dargestellten Endlage mit seinem Kragen 36 an einen in der Hülse 30 vorgesehenen Anschlag 32 stößt. Dabei wird eine zwischen einer Außenfläche des Schiebers 29 und einer Innenfläche der Hülse 30 vorgesehene Druckfeder 31 gespannt. Im ausgefahrenen Zustand des Schiebers 29 ragt das mit dem Schieber 29 verbundene Heizelement 25 aus Hülse 30 soweit heraus, daß die Abspritzöffnung 14 des Brennstoffeinspritzventils 3 überdeckt wird und damit der Brennstoffstrahl 10 beispielsweise vollständig durch das Heizelement 25 hindurchtritt. Beim oder nach dem Ausfahren des Schiebers 29 wird das elektrische Heizelement 25 ebenfalls bestromt, wofür elektrische Verbindungsleitungen 20 dienen, die beispielsweise vom Schieber 29 zum Stift 28 und von diesem über den Schaltmagneten 26 zum elektronischen Steuergerät 40 führen. Im ausgefahrenen Zustand des Schiebers 29 bleibt der Schaltmagnet 26 bestromt, um die Druckfeder 31 im federbelasteten Zustand zu halten. Nach dem Abschalten des Schaltmagneten 26 wird der Schieber 29 mit dem Heizelement 25 durch die Federkraft der Druckfeder 31 wieder in die Ausgangsposition zurückgeführt, bei der das Heizelement 25 außerhalb des Brennstoffstrahls 10 und zumindest teilweise in der Hülse 30 ist.

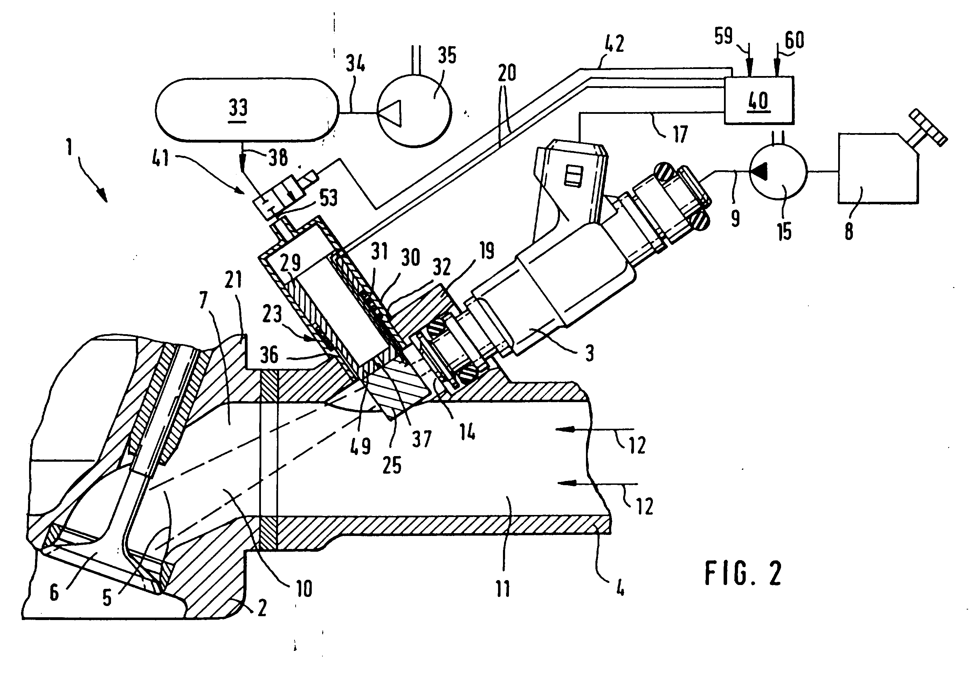

Es ist auch möglich, die Ausfahrvorrichtung 23 hydraulisch oder pneumatisch betätigbar auszubilden. Eine mögliche Ausführungsform wird im folgenden anhand eines ersten erfindungsgemäßen Ausführungsbeispiels nach Figur 2 beschrieben, wobei alle gleichen oder gleichwirkenden Teile mit den gleichen Bezugszeichen nach Figur 1 gekennzeichnet sind. In Figur 2 ist in einer teilweisen Schnittdarstellung der Brennstoffeinspritzvorrichtung 1 das elektrische Heizelement 25 gezeigt, das ebenfalls einen in der Hülse 30 verschiebbaren Schieber 29 hat, der jedoch in erfindungsgemäßer Weise mittels Druckluftbeaufschlagung betätigbar ist. Bei Druckluftbeaufschlagung des Schiebers 29 verschiebt sich dieser aus der Hülse 30 bis zu seiner Endlage mit an dem Anschlag 32 der Hülse 30 anliegendem Kragen 36. Im ausgefahrenen Zustand des Schiebers 29 wird das elektrische Heizelement 25 über die elektrischen Verbindungsleitungen 20 bestromt, um den durch das Heizelement 25 hindurchtretenden Brennstoffstrahl 10 aufzuheizen. Liegt keine Druckluft an, so führt die Druckfeder 31 den Schieber 29 in seine Ausgangsposition zurück, bei der sich das elektrische Heizelement 25 wieder außerhalb des Brennstoffstrahls 10 befindet.

Zur Bereitstellung der Druckluft ist beispielsweise ein Druckluftbehälter 33 vorgesehen, der über eine Druckluftbehälterleitung 34 an eine Pumpvorrichtung 35 und über eine Druckluftleitung 38 und eine Schieberdruckluftleitung 53 an der Ausfahrvorrichtung 23 angeschlossen ist. Die Pumpvorrichtung 35 ist beispielsweise in Form einer membranangetriebenen Luftpumpe ausgebildet, bei der die in einem Kurbelwellengehäuse der Brennkraftmaschine 2 von einem Kolben durch seine Auf- und Abwärtsbewegungen erzeugten Druckschwankungen zum Pumpen der Luft ausnutzt werden. Der Druckluftbehälter 33 kann bei laufender Brennkraftmaschine 2 in bestimmten Betriebsbereichen der Brennkraftmaschine 2, in denen zum Beispiel keine Beheizung des Brennstoffstrahls 10 vorgesehen ist, von der Pumpvorrichtung 35 mit Luft nachgefüllt werden, um für weitere Startvorgänge ausreichend Druckluft im Druckluftbehälter 33 bereitzustellen.

Die Druckluft strömt aus dem Druckluftbehälter 33 in der Druckluftleitung 38 zu einem zum Beispiel elektromagnetisch betätigbaren Schaltventil 41 und über die Schieberdruckluftleitung 53 in den Innenraum der Hülse 30, beziehungsweise in den Innenraum des Schiebers 29. Das Schaltventil 41 ist beispielsweise über eine Steuerleitung 42 mit dem elektronischen Steuergerät 40 verbunden, um in Offenstellung bei Ansteuerung die Druckluftleitung 38 zur Schieberdruckluftleitung 53 und zur Ausfahrvorrichtung 23 freizugeben und in Schließstellung abzusperren. Bei geöffnetem Schaltventil 41 strömt die Druckluft vom Druckluftbehälter 33 in den Innenraum der Hülse 30 und von dort zum Beispiel aus einer im Schieber 29 vorgesehenen, insbesondere drosselnden Schieberöffnung 37 zum Heizelement 25, wonach diese dem Brennstoffstrahl 10 zugemischt wird.

Die nur im beheizten Zustand des Heizelements 25 dem Brennstoffstrahl 10 zugeführte Druckluft bewirkt eine verbesserte Verdampfung des Brennstoffstrahls 10 aufgrund einer intensiveren, räumlich wirkenden Vermischung der über die Gesamtoberfläche des Heizelements 25 austretenden erwärmten Druckluft. Wie in Figur 1, ist die Ansteuerung des Schaltventils 41, beziehungsweise die Druckluftbeaufschlagung mit Bestromung des elektrischen Heizelements 25, im wesentlichen auf die Kaltstartphase der Brennkraftmaschine 2, insbesondere auf die ersten 120 Sekunden nach dem Start, beschränkt. Es ist aber auch möglich, das elektrische Heizelement 25 zusätzlich noch in Betriebsbereichen der Brennkraftmaschine 2 auszufahren und zu bestromen, bei denen beispielsweise nur kurzzeitig erhöhte schädliche Bestandteile im Abgas, zum Beispiel bei Vollast, auftreten. Derartige Betriebsbereiche können vom elektronischen Steuergerät 40 mittels Sensoren erfaßt werden. Das elektronische Steuergerät 40 aktiviert dabei nur bei Bedarf die Ausfahrvorrichtung 23 und das elektrische Heizelement 25, um durch die Beheizung des Brennstoffstrahls 10 eine verbesserte Brennstoffzerstäubung und eine weitere Senkung der schädlichen Bestandteile im Abgas zu erhalten.

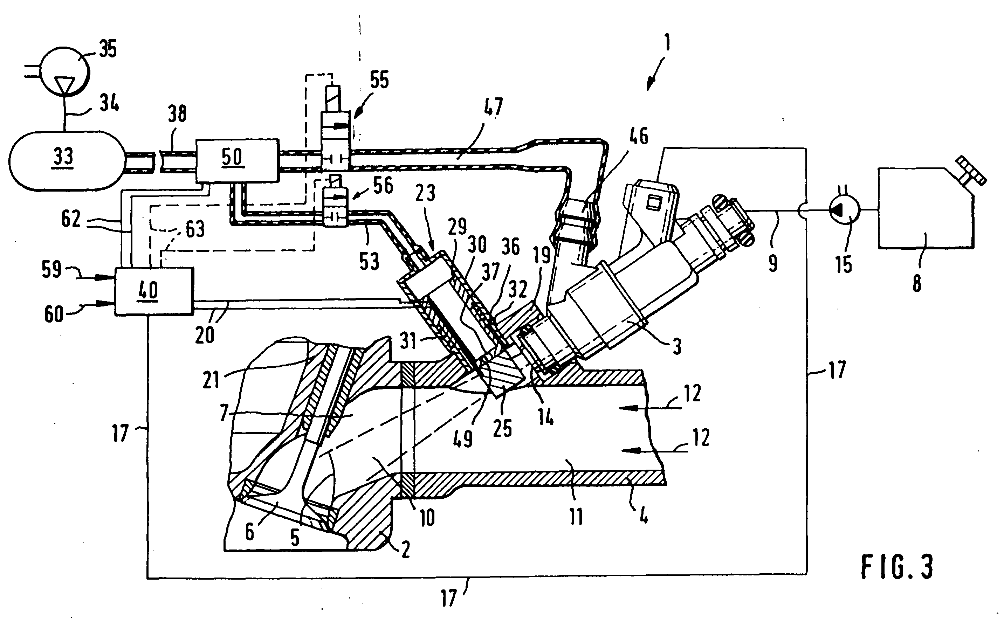

Die Figur 3 zeigt ein zweites Ausführungsbeispiel der Erfindung, bei dem alle gleichen oder gleichwirkenden Teile mit den gleichen Bezugszeichen des ersten Ausführungsbeispiels nach der Figur 2 gekennzeichnet sind. Die Ausfahrvorrichtung 23 ist in Figur 3 gemäß dem ersten Ausführungsbeispiel nach Figur 2 ausgebildet. Das Brennstoffeinspritzventil 3 ist zusätzlich mit einer sogenannten Luftumfassung ausgestattet, bei der über einen Hilfsluftanschluß 46 Hilfsluft, beispielsweise unmittelbar nach der Abgabe des Brennstoffstrahls 10, zugeführt wird, um durch das Einwirken der Hilfsluft auf den Brennstoffstrahl 10 die Brennstoffzerstäubung weiter zu verbessern. Der Hilfsluftanschluß 46 ist über eine Hilfsluftleitung 47 an eine Steuereinrichtung 50 angeschlossen, die über die Druckluftleitung 38 an den Druckluftbehälter 33 angeschlossen ist. Weiterhin ist die Steuereinrichtung 50 über die Schieberdruckluftleitung 53 mit dem Innenraum der Hülse 30, beziehungsweise dem Innenraum des Schiebers 29 verbunden. Die Steuereinrichtung 50 übernimmt Funktionen zweier einzelner Ventile 55, 56, die auch anstelle der Steuereinrichtung 50 verwendet werden können und daher in der Figur 3 nur gestrichelt dargestellt sind. Die Steuereinrichtung 50 ist über elektrische Verbindungsleitungen 62 mit dem elektronischen Steuergerät 40 verbunden. In gleicher Weise ist es auch möglich, die Ventile 55, 56 über elektrische Verbindungsleitungen 63 mit dem elektronischen Steuergerät 40 zu verbinden, wobei das Ventil 55 in der Hilfsluftleitung 47 und das Ventil 56 in der Schieberdruckluftleitung 53 vorzusehen ist. Die Ventile 55, 56 haben beispielsweise eine verstellbare Drosselwirkung, um die in der Hilfsluftleitung 47 oder in der Schieberleitung 53 strömende Druckluft zu regeln. Die Ansteuerung der Steuereinrichtung 50, beziehungsweise der Ventile 55, 56 mittels dem elektronischen Steuergerät 40 ist derart gestaltet, daß die Schieberdruckluftleitung 53 im kalten Zustand der Brennkraftmaschine 2 mit ausreichendem Druck versorgt wird, um die Ausfahrvorrichtung 23 zu betätigen, damit das Heizelement 25 den Brennstoffstrahl 10 beheizt. Darüber hinaus ist es auch möglich, beispielsweise gleichzeitig zur Betätigung der Ausfahrvorrichtung 23 oder zeitlich versetzt dazu, das Ventil 55 in der Hilfsluftleitung 47 zu betätigen, so daß in Offenstellung des Ventils 55 Hilfsluft vom Druckbehälter 33 zur Hilfsluftleitung 47 und über den Hilfsluftanschluß 46 in das Brennstoffeinspritzventil 3 gelangt, um die Brennstoffzerstäubung des Brennstoffstrahls 10 weiter zu verbessern. Die Hilfsluftzufuhr zum Brennstoffeinspritzventil 3 kann auch noch nach dem Abschalten der Ausfahrvorrichtung 23 mittels des Ventils 56 fortgesetzt werden, beispielsweise mit vom Ventil 55 gedrosselter Hilfsluftmenge.

## Patentansprüche

1. Brennstoffeinspritzvorrichtung (1) für eine Brennkraftmaschine (2), mit wenigstens einem Brennstoffeinspritzventil (3), das Brennstoff aus einer Abspritzöffnung (14) in Form eines Brennstoffstrahls (10) abspritzt und Mitteln (25) zur Beheizung des Brennstoffstrahls, (10), wobei die Mittel (25) stromabwärts der Abspritzöffnung (14) zwischen einer ersten Position außerhalb des Brennstoffstrahls (10) und einer zweiten Position wenigstens teilweise innerhalb des Brennstoffstrahls (10) einbringbar sind, dadurch gekennzeichnet, daß in der zweiten Position im beheizten Zustand der Mittel (25) Druckluft dem Brennstoffstrahl (10) zugeführt wird, die aus den Mitteln (25) austritt.

2. Brennstoffeinspritzvorrichtung nach Anspruch 1, dadurch gekennzeichnet, daß als Mittel zur Beheizung ein elektrisches Heizelement (25) vorgesehen ist.

3. Brennstoffeinspritzvorrichtung nach Anspruch 2, dadurch gekennzeichnet, daß das elektrische Heizelement (25) aus Widerstandselementen gebildet wird, die zwischen sich eine Vielzahl von Strömungskanälen mit großer Wärmeaustauschfläche bilden.

4. Brennstoffeinspritzvorrichtung nach Anspruch 2, dadurch gekennzeichnet, daß das elektrische Heizelement (25) mit einem in einer Hülse (30) verschiebbar untergebrachten Schieber (29) verbunden ist, der mittels elektromagnetischer Kräfte betätigbar ist.

5. Brennstoffeinspritzvorrichtung nach Anspruch 2, dadurch gekennzeichnet, daß das elektrische Heizelement (25) mit einem in einer Hülse (30) verschiebbar untergebrachten Schieber (29) verbunden ist, der mittels Druckluftbeaufschlagung betätigbar ist.

6. Brennstoffeinspritzvorrichtung nach Anspruch 4, dadurch gekennzeichnet, daß ein Schaltmagnet (26) zur Bereitstellung der elektromagnetischen Kräfte vorgesehen ist, der von einem elektronischen Steuergerät (40) ansteuerbar ist.

7. Brennstoffeinspritzvorrichtung nach Anspruch 5, dadurch gekennzeichnet, daß die Druckluftbeaufschlagung des Schiebers (29) über ein Ventil (41) erfolgt.

8. Brennstoffeinspritzvorrichtung nach Anspruch 1, dadurch gekennzeichnet, daß dem wenigstens einen Brennstoffeinspritzventil (3) Luft zuführbar ist, die von einem Ventil (55) steuerbar ist.

## Claims

1. Fuel injection device (1) for an internal combustion engine (2), with at least one fuel injection valve (3), which sprays fuel from a spray opening (14) in the form of a fuel jet (10), and with means (25) for heating the fuel jet (10), wherein the means (25) can be introduced downstream of the spray opening (14) between a first position outside the fuel jet (10) and a second position at least partially within the fuel jet (10), characterized in that, in the second position, with the means (25) heated, compressed air which emerges from the means (25) is fed to the fuel jet (10).

2. Fuel injection device according to Claim 1, characterized in that an electric heating element (25) is provided as means for heating.

3. Fuel injection device according to Claim 2, characterized in that the electric heating element (25) is formed by resistor elements which, between them, form a multiplicity of flow ducts with a large heat exchange area.

4. Fuel injection device according to Claim 2, characterized in that the electric heating element (25) is connected to a slide (29) which is accommodated displaceably in a sleeve (30) and can be actuated by means of electromagnetic forces.

5. Fuel injection device according to Claim 2, characterized in that the electric heating element (25) is connected to a slide (29) which is accommodated displaceably in a sleeve (30) and can be actuated by being subjected to compressed air.

6. Fuel injection device according to Claim 4, characterized in that an actuating magnet (26), which can be driven by an electronic control unit (40), is provided to provide the electromagnetic forces.

7. Fuel injection device according to Claim 5, characterized in that the slide (29) is subjected to compressed air via a valve (41).

8. Fuel injection device according to Claim 1, characterized in that air which can be controlled by a valve (55) can be supplied to the fuel injection valve (3), of which there is at least one.

## Revendications

1. Dispositif d'injection de carburant (1) pour un moteur à combustion interne (2) comprenant :
- au moins un injecteur de carburant (3) qui éjecte du carburant par un orifice d'éjection (14) sous la forme d'un jet de carburant (10) et,
- des moyens de chauffage (25) pour chauffer le jet de carburant (10),
- ces moyens (25) étant introduits en aval de l'orifice d'éjection (14) entre une première position extérieure du jet de carburant (10) et une seconde position, au moins en partie intérieure du jet de carburant (10),
caractérisé en ce que
- dans la seconde position, à l'état chaud, les moyens (25) reçoivent de l'air comprimé pour le jet de carburant (10), cet air sortant de ces moyens de chauffage (25).

2. Dispositif d'injection de carburant selon la revendication 1,
caractérisé en ce que
les moyens de chauffage sont constitués par un élément chauffant électrique (25).

3. Dispositif d'injection de carburant selon la revendication 2,
caractérisé en ce que
l'élément chauffant électrique (25) est formé par des éléments résistants constituant entre eux un grand nombre de canaux d'écoulement ayant une grande surface d'échange de chaleur.

4. Dispositif d'injection de carburant selon la revendication 2,
caractérisé en ce que
l'élément chauffant électrique (25) est relié à un tiroir (29) logé de manière coulissante dans un manchon (30), le tiroir est actionné par une force électromagnétique.

5. Dispositif d'injection de carburant selon la revendication 2,
caractérisé en ce que
l'élément chauffant électrique (25) est relié à un tiroir (29) logé de manière coulissante dans un manchon (30), ce tiroir étant actionné par de l'air comprimé.

6. Dispositif d'injection de carburant selon la revendication 4,
caractérisé par
un aimant de commutation (26) pour fournir la force électromagnétique, cet aimant étant commandé par un appareil de commande électronique (40).

7. Dispositif d'injection de carburant selon la revendication 5,
caractérisé par
une vanne (41) fournissant l'air comprimé au tiroir (29).

8. Dispositif d'injection de carburant selon la revendication 1,
caractérisé en ce que
de l'air est fourni de manière commandée par une vanne (55) à au moins un injecteur de carburant (3).
